# FASCICULE DE BREVET EUROPEEN

(11) **EP 1 000 335 B1**
(45) Date de publication et mention de la délivrance du brevet: **14.05.2003**
(21) Numéro de dépôt: 97932666.7
(22) Date de dépôt: 15.07.1997
(51) Int. Cl.: G01N 1/30

(54) **PROCEDE DE FIXATION ET D'ENROBAGE DE TISSUS DESTINES AUX PREPARATIONS HISTOLOGIQUES**
METHODE ZUM FIXIEREN UND EINBETTEN VON GEWEBEN FÜR HISTOLOGISCHE PRÄPERATE
METHOD FOR FIXING AND EMBEDDING TISSUES FOR HISTOLOGICAL PREPARATIONS

(43) Date de publication de la demande: 17.05.2000
(73) Titulaire: Pajak, Bernard, 6953 Mormont, Nassogne (BE)
(72) Inventeur: Pajak, Bernard, 6953 Mormont, Nassogne (BE)
(74) Mandataire: Kuborn, Jacques
(86) Numéro de dépôt international: BE9700083
(87) Numéro de publication internationale: WO99004240

(56) Documents cités:
- WO-A-92/19951
- GB-A- 2 161 822
- US-A- 3 466 209
- US-A- 3 546 334
- US-A- 4 243 692
- US-A- 4 493 821
- US-A- 5 431 952
- DATABASE WPI Section Ch, Week 8805 Derwent Publications Ltd., London, GB; Class B04, AN 88-034669 XP002055364 & SU 1 317 307 A (SUPONITSKII V YA) , 15 juin 1987
- KLOSEN P. ET AL: "PEG Embedding for Immunochemistry" J. HISTOCHEM. CYTOCHEM, vol. 41, 1993, pages 455-463, XP002056575
- WHITELAND J L ET AL: "Immunohistochemical Detection of T-cell Subsets and Other Leukocytes in Paraffin -embedded Rat and Mouse Tissues with Monoclonal Antibodies." JOURNAL OF HISTOCHEMISTRY AND CYTOCHEMISTRY 43 (3). 1995. 313-320. ISSN: 0022-1554, XP002056576
- BECKSTEAD J.H.: "A simple Technique for Preservation of Fixation-sensitive Antigens in Paraffin-embedded Tissues" J. HISTOCHEM. AND CYTOCHEM., vol. 42, 1994, pages 1127-1134, XP002056577 cité dans la demande

## Description

### DOMAINE DE L'INVENTION

L'invention concerne un procédé de fixation et d'enrobage de tissus destinés aux préparations histologiques.

### ETAT DE LA TECHNIQUE

On utilise actuellement dans ce domaine essentiellement deux types de procédés, à savoir
1. les coupes à congélation
2. les coupes de tissus fixés et enrobés

### Les coupes à congélation

La congélation remplit la double fonction de fixer les tissus dans l'état où ils se trouvent, et de les solidifier pour permettre la coupe.

Les coupes à congélation fournissent un matériel histologique
- qui ne présente sensiblement pas de dénaturation moléculaire, et permet donc de bonnes déterminations en ce qui concerne la nature des molécules présentes
- qui a l'inconvénient de se présenter sous la forme de coupes épaisses, ne permettant donc pas un examen microscopique à fort grossissement, et d'une structure morphologique du tissu fortement altérée par la congélation
- de sorte que, s'il est possible de bien marquer les molécules, il n'est pas possible de localiser de manière fiable les molécules ainsi marquées dans la structure morphologique du tissu.
   Enfin, les coupes effectuées dans le tissu congelé sont ensuite préparées et examinées à la température ambiante, de sorte qu'une fixation chimique est encore nécessaire après la coupe.

### Les coupes de tissus fixés et enrobés

Dans ce type de procédé, le tissu est (1) d'abord fixé, puis (2) soumis à une étape de déshydratation, et enfin (3) soumis à une étape d'enrobage pour solidifier le tissu et permettre la coupe, après quoi (4) le tissu est coupé en fines lamelles, généralement au microtome, ces lamelles sont disposées sur des lames porte-objet, et (5) ces préparations sont enfin débarrassées du produit d'enrobage et réhydratées, avant le traitement histochimique.

L'étape (1) de fixation a pour but de bloquer sensiblement toute altération physico-chimique du tissu, pour qu'il se maintienne dans l'état initial, dans lequel il a été prélevé, et de permettre ainsi des déterminations, en particulier immunologiques.

L'étape (3) d'infiltration/enrobage a pour but de solidifier le tissu, pour permettre de réaliser des coupes aussi fines que possible, permettant un examen plus approfondi.

L'étape (2) de déshydratation est une étape intermédiaire, dont le but est de remplacer l'eau présente dans les tissus par un composé qui pourra lui-même être substitué - éventuellement avec utilisation de solvants - par le composé d'infiltration/enrobage.

L'étape (4) fournit les coupes de tissu enrobé, et donc solidifié, et l'étape (5) restaure enfin sensiblement le tissu dans sa condition initiale, permettant les déterminations cherchées.

Pour la mise en oeuvre de l'étape de fixation (1), on connaît divers liquides fixateurs, tels que des compositions à base de sels solubles de zinc, divers composés organiques (voir par exemple EP-A-0562877), ainsi que l'acétone (voir par exemple US-A-5 104 640).

Pour l'étape de déshydratation (2), on connaît divers composés, tels que par exemple l'éthanol, le méthanol, l'isopropanol et l'acétone (voir par exemple l'article de Beckstead cité plus loin).

Pour l'étape (3) d'infiltration/enrobage, on utilise actuellement, de manière classique, de la paraffine qui présente l'inconvénient d'être peu soluble, et de ne pouvoir dès lors être ensuite éliminée qu'en recourant à des solvants puissants, et de ne fondre qu'à des températures de 58-60°C, nettement supérieures à la température physiologique des tissus, et donc dénaturantes pour ceux-ci.

Jay H. Beckstead, dans The Journal of Histochemistry & Cryochemistry ("A Simple Technique for Preservation of Fixation-sensitive Antigens in Paraffin-embedded Tissues" vol 42 No. 8 pp 1127-1134, 1994) décrit un procédé de fixation/enrobage utilisant une fixation par sel de zinc, associée à un enrobage à la paraffine, et le compare, d'une part à des procédés connus d'enrobage à la paraffine recourant à d'autres fixateurs, et d'autre part au procédé par congélation.

Ce procédé consiste
- à fixer les tissus par des sels solubles de zinc dans un tampon,
- à déshydrater les tissus ainsi fixés par des concentrations croissantes d'éthanol/isopropanol,
- à éliminer l'éthanol/isopropanol avec du xylène,
- à infiltrer/enrober à la paraffine à 58-60°C,
- à effectuer les coupes,
- à éliminer la paraffine avec trois bains de xylène, suivis de trois bains d'isopropanol, et à réhydrater.
   L'acétone - qui agit également comme déshydratant - est connue pour provoquer une sensible dénaturation morphologique des tissus. Pour cette raison, elle est considérée par les chercheurs comme inappropriée à la fixation, lorsque l'on souhaite effectuer des déterminations morphologiques, ce qui est très généralement le cas des coupes histologiques préparées en vue d'observations au microscope.
   Les alcools (éthanol, méthanol, isopropanol, par exemple) sont connus pour ne pas dégrader sensiblement la structure morphologique, lorsqu'ils sont utilisés avec précaution, et ils sont dès lors très généralement utilisés à ce jour pour la déshydratation des tissus. Ils présentent par contre un effet marqué de dégradation des structures moléculaires (par coagulation), et ils présentent dès lors des inconvénients lorsque l'on vise à conserver tant les structures moléculaires que les structures morphologiques, comme c'est le cas des études immunologiques in situ et ex vivo de l'immunohistochimie.
   D'autre part, ils présentent un très fort pouvoir déshydratant et, pour éviter d'altérer la structure morphologique, il est nécessaire d'effectuer la déshydratation par étapes successives, avec des concentrations croissantes en alcool, ce qui alourdit sensiblement la procédure.
   La paraffine étant généralement peu soluble il faut prévoir, entre l'étape de déshydratation et l'étape d'enrobage, une étape intermédiaire d'élimination de l'agent déshydratant par des solvants tels que le toluène, le xylène, le benzène ou analogues, ce qui pose des problèmes de dénaturation des tissus, et de toxicité, et ajoute encore une étape au mode opératoire.
   Enfin, l'imprégnation par la paraffine, demande des températures de ± 60°C, supérieures à la température physiologique, et exerce ainsi un effet dénaturant (coagulation thermique) sur les structures moléculaires.
   De plus, le processus d'élimination de la paraffine et de réhydratation des préparations doit se faire également avec des solvants puissants qui ne sont pas sans inconvénients.
   On connaît également ("Immunofluorescence Detection of F-actin on Low Melting Point Wax Sections from Plant Tissues" par Stanislav Vitha et al, dans The Journal of Histochemistry & Cryochemistry, vol 45(1):89-95, 1997) un procédé consistant
- à fixer les tissus successivement dans des solutions de formaldéhyde et de chlorure de zinc, la dernière étape étant effectuée à 60°C,
- à déshydrater les tissus par des concentrations croissantes d'éthanol,
- à infiltrer/enrober, en plusieurs étapes, les tissus dans une résine constituée de 90% de polyéthylène glycol 400 distéarate [que l'on désigne également sous le nom de polyoxyéthylène bis(stéarate)] et de 10% de 1-hexadécanol, à 35-37°,
- à effectuer les coupes, et
- à éliminer la résine à l'éthanol de qualité technique, et à réhydrater les préparations

Selon l'invention, on se propose de fournir un procédé de fixation/enrobage qui ne dénature sensiblement ni la structure moléculaire, ni la structure morphologique des tissus, pour permettre des déterminations aussi fiables et précises que possible. Ceci est important, en particulier pour des déterminations immunologiques in situ et ex vivo, dans lesquelles on cherche à réaliser des déterminations et analyses immunologiques non plus sur des molécules biologiques extraites de leur environnement cellulaire et/ou tissulaire, mais bien dans cet environnement

### DESCRIPTION DE L'INVENTION

Un but de l'invention est donc de fournir un procédé permettant d'obtenir des coupes de tissus qui ne sont sensiblement dénaturées, ni du point de vue moléculaire, de manière à permettre des déterminations immunologiques quantitatives, ni du point de vue morphologique, pour permettre de réaliser ces déterminations dans l'environnement cellulaire et/ou tissulaire d'origine.

Les procédés connus dans la technique ne permettent pas d'atteindre ce but, dans la mesure où ils dénaturent soit la structure moléculaire, soit la structure morphologique, soit encore les deux.

Ce but est atteint selon l'invention par un procédé de fixation et d'enrobage de tissus destinés à des préparations histologiques, pouvant être mis en oeuvre sensiblement à la température physiologique, qui comprend essentiellement les étapes consistant à:
- fixer le tissu dans un fixateur liquide comprenant au moins un sel de zinc soluble, dans un tampon aqueux,
- déshydrater le tissu ainsi fixé dans un liquide constitué essentiellement d'acétone,
- enrober et infiltrer le tissu fixé et déshydraté par une résine soluble essentiellement en toute proportion dans l'acétone.

Suivant une autre caractéristique de l'invention la résine fond à une température non supérieure à 37 - 40°C.

Suivant une caractéristique supplémentaire la résine est constituée de polyoxyéthylène bis(stéarate).

Suivant encore une caractéristique supplémentaire la résine comprend, sur base de 100% en poids de la composition finale, de 0 à 20% en poids d'un composé solidifiant, comprenant de l'hexadécanol et/ou du diéthylène glycol distéarate, en vue de la rendre plus solide à température ambiante.

L'invention concerne également une trousse pour la préparation de coupes histologiques par application du procédé qui comprend essentiellement un flacon de solution aqueuse tamponnée d'un ou de plusieurs sels de zinc, un flacon d'acétone et une quantité de composition de résine de polyoxyéthylène bis(stéarate) additionnée d'hexadécanol et/ou de diéthylène glycol distéarate en fonction de la température voulue d'utilisation.

Le procédé de l'invention est applicable dans tous les domaines de l'histologie et de l'histochimie, et sa mise en oeuvre est extrêmement simple. Il peut être effectué à une température de 35-37°C, soit sensiblement la température physiologique de tissus vivants.

La résine de polyoxyéthylène bis(stéarate), est déjà connue par l'article de S. Vitha et al.

Cette résine, dont le point de fusion est de 37°C, permet d'effectuer les coupes dans de bonnes conditions jusqu'à des températures de 10 à 12°C. L'ajout d'hexadécanol a pour but de la rendre plus solide à la température ambiante, pour permettre d'effectuer les coupes à la température du laboratoire.

Selon l'invention on a encore trouvé que l'hexadécanol pouvait également être remplacé en tout ou en partie par le diéthylène glycol distéarate qui présente sensiblement les mêmes propriétés (sensiblement inerte vis-à-vis des tissus, et effet durcissant sur la résine)

Une caractéristique importante du procédé de l'invention, outre l'enrobage à température "normale", est l'association d'un fixateur à base de sels de zinc et de l'acétone comme agent déshydratant.

L'acétone ne figure généralement pas dans les traités d'histologie (MARTOJA R. & MARTOJA M., 1967, "Initiation aux Techniques de l'Histologie Animale", édit. MASSON et Cie) en tant que fixateur, même s'il est occasionnellement utilisé comme déshydratant. Ceci se justifie par sa faible vitesse de pénétration dans les tissus et les perturbations morphologiques qu'il y occasionne. Il est néanmoins cité comme fixateur dans quelques cas où l'on cherche à préserver une activité enzymatique *in situ*.

POLLARD et al (J. Histochem. Cytochem., 1987, 35 (11): 1329) signalent que des molécules comme CD4 et CD8, marqueurs de lymphocytes T, ne peuvent plus être mises en évidence sur des coupes de tissus fixés à l'acétone et enrobés dans la paraffine alors qu'ils restent détectables sur coupes à congélation traitées à l'acétone pendant au moins 30 minutes. Ce résultat semble montrer que l'acétone elle-même n'est pas dénaturante mais que, associée à un enrobage en paraffine, elle ne permet plus la détection de ces deux marqueurs.

D'après les recherches de l'inventeur, l'utilisation de l'acétone comme fixateur et agent déshydratant, et de la résine de polyoxyéthylène bis(stéarate) comme milieu d'enrobage améliore les performances des procédés de fixation/enrobage en autorisant l'emploi d'un plus grand nombre d'anticorps et en facilitant la réalisation de coupes fines. Malgré cette amélioration, ce procédé ne permet pas encore la détection de molécules telles CD3, CD4 et CD8 (voir tableau 2), confirmant ainsi les résultats de POLLARD et al. De plus, on observe un certain nombre de déformations morphologiques induites par l'acétone: dilatation des tissus, apparition d'espaces intercellulaires artéfactuels.

La combinaison selon l'invention, d'une fixation préalable des tissus par une solution aqueuse tamponnée d'un sel de zinc, et d'une déshydratation à l'acétone, suivie d'une infiltration/enrobage par une résine telle que le polyoxyéthylène bis(stéarate) entièrement miscible à l'acétone, supprime ces défauts.

En effet, non seulement la préservation des tissus moléculaires apparaît totale, mais la fixation aux sels de zinc semble assurer aux tissus une stabilisation morphologique telle qu'ils deviennent ainsi résistants aux déformations induites par l'acétone.

L'enrobage ultérieur par une résine entièrement miscible à l'acétone évite d'autre part de devoir recourir à des solvants intermédiaires, pour l'élimination de l'acétone avant l'enrobage; ce même avantage se retrouve également ultérieurement, lorsqu'il faut éliminer la résine et réhydrater le tissu.

Pour l'homme du métier connaissant le procédé selon S. Vitha et al, aussi bien que les propriétés de l'acétone, et souhaitant travailler à température normale tout en simplifiant au maximum le procédé, une démarche normale aurait dès lors consisté à utiliser l'acétone comme fixateur et déshydratant, obtenant ainsi un procédé sensiblement dénaturant du point de vue morphologique.

De manière surprenante, les inventeurs ont découvert que l'association d'une fixation aux sels de zinc, suivie d'une déshydratation par l'acétone n'entraînait pas la dénaturation moléculaire sensible normalement produite par l'acétone.

Sans vouloir en aucune façon se limiter à cette explication, il semble que la fixation physico-chimique produite par les sels de zinc soit telle qu'elle s'oppose à une sensible modification ultérieure par l'acétone.

Un autre avantage considérable alors apporté par l'acétone réside en ce que l'acétone est d'autre part miscible en toutes proportions dans la résine de polyoxyéthylène bis(stéarate), de sorte qu'il n'est pas nécessaire de recourir à des solvants puissants tels que par exemple benzène, toluène ou xylène pour permettre le passage de l'acétone à la résine, ce qui réduit encore la dénaturation, simplifie l'ensemble du procédé en réduisant le nombre des étapes qui le constituent et évite également les problèmes d'environnement ou de toxicité éventuellement liés aux solvants ci-dessus.

Le procédé de l'invention assure ainsi une parfaite synergie entre les différents stades opératoires de la préparation des coupes histologiques, pour atteindre le résultat voulu, à savoir une dénaturation moléculaire et morphologique minimales, et ce par un procédé remarquablement simplifié par rapport à la technique antérieure.

Il trouvera de larges domaines d'application dans la préparation de coupes histologiques en vue de déterminations immunologiques **in situ** et **ex vivo**, par la qualité des coupes qu'il permet.

Un domaine de prédilection du procédé selon l'invention est l'immunohistochimie. Sur les coupes obtenues par le procédé, il est en effet possible de détecter de nombreuses molécules telles que les marqueurs membranaires caractéristiques de lignées cellulaires; les marqueurs d'activation reflétant l'état des cellules; les protéines cytoplasmiques parmi lesquelles les cytokines ou les protéines antiapoptotiques; les résidus glycosidiques mis en évidence par les lectines, les fragments d'acides nucléiques révélés par l'hybridation in situ ou par la réaction TUNEL caractérisant l'apoptose; cette liste n'étant en rien limitative et donnée uniquement à titre d'illustration.

Un autre domaine d'application du procédé selon l'invention est le remplacement des procédés classiques de préparation de coupes histologiques pour observation au microscope, par la simplification globale et la fiabilité qu'il permet.

### Exemple de protocole de préparation des coupes

L'on suit le protocole ci-après:
1. Prélèvement du tissu
2. Fixation: des petits fragments de tissu (5 mm de côté) sont immergés dans le liquide fixateur (quelques ml) aux sels de zinc préalablement refroidi à 4°C, et y sont maintenus pendant 1 à 7 jours à 4°C. La fixation est réalisée dans de petites fioles en verre de type pillulier.
   Pour éviter la précipitation des sels de zinc, le liquide fixateur est obtenu en dissolvant 5% de sels de zinc (acétate et chlorure, en parts égales) dans de l'eau distillé. Cette solution est alors ajoutée à un tampon de Tris-HCl ajusté à pH 7,4, contenant 0,1% d'acétate de calcium (1 volume de solution de sels de zinc pour 9 volumes de tris-HCl) de manière à obtenir une solution tamponnée de sels de zinc à 0,5%.
3. Déshydratation: le liquide fixateur est éliminé et remplacé immédiatement par de l'acétone pure (qualité analytique); on y laisse séjourner les fragments pendant 6 à 24 heures à 4°C;
4. Imprégnation et enrobage: les fragments sont transférés dans des pilluliers maintenus à 37°C contenant la résine liquide. De manière à assurer une bonne imprégnation, on change par trois fois le bain de résine, chacun se prolongeant de 10 à 30 minutes. Après le troisième bain, les fragments sont placés dans un moule de taille appropriée (1 à 3 cm³) préalablement rempli de résine liquide. Une fois plongés dans la résine liquide, les fragments peuvent y être orientés en fonction des nécessités ultérieures; au besoin, on maintient la résine liquide pendant cette opération en y plongeant une spatule métallique chauffée à la flamme. Lorsque le fragment est correctement orienté, on laisse refroidir et par là même, solidifier la résine à température ambiante dans un local sec. Après une nuit à deux jours, le bloc solide de résine peut être démoulé et préparé pour être débité en coupes fines.
5. Les coupes fines (3 à 5 µm) sont réalisées au microtome à glissière ou rotatif à température ambiante. Etant donné la basse température de fusion de la résine, celle-ci peut devenir difficile à couper à des températures supérieures à 22°C.
6. On étale les coupes sur des lames porte-objet préalablement gélatinées ou traitées à la poly-lysine. La résine étant hygroscopique, il est déconseillé de l'étaler sur bain d'eau. On préfèrera l'étaler sur une goutte d'eau albuminée déposée directement sur la lame; l'étalement se poursuit à température ambiante jusqu'à séchage complet de la lame.
7. Les lames ainsi obtenues peuvent être conservées indéfiniment jusqu'au traitement histochimique.

### Exemple de traitement immunohistochimique

- Elimination de la résine dans un bain d'acétone pendant 10 minutes
- Réhydratation des coupes dans un bain de PBS (tampon phosphate salin à pH 7,4) pendant quelques secondes (pouvant être prolongée pendant plusieurs dizaines de minutes si nécessaire)
- Inhibition des pseudoperoxydases endogènes (étape facultative si le procédé enzymatique de révélation fait appel à une autre enzyme que la peroxydase): incubation des coupes dans H₂O₂ à 1 à 3% pendant 10 à 30 minutes. Cette étape doit nécessairement précéder toutes les autres pour être efficace.
- Saturation des sites de fixation non spécifiques par le "Blocking Reagent" de la firme Boehringer (n° de catalogue 1 096 176) dissous dans du PBS à pH 7,4; on peut également utiliser la BSA (Bovine Serum Albumin) à 1% dans le PBS.
- Lavage dans PBS
- Incubation des lames avec l'anticorps spécifique biotinylé dilué dans la solution d'agent saturant ci-dessus. Les conditions d'incubation de l'anticorps dépendent de chaque anticorps; à titre d'exemple, une concentration de 10µg/ml d'anticorps donne de bons résultats après une incubation d'une heure à température ambiante.
- Lavage dans PBS
- Incubation des coupes avec le complexe avidine-enzyme biotinylé (ABC); ce complexe existe sous trois formes différentes comprenant, comme enzyme, soit la peroxydase, soit la phosphatase alcaline, soit encore la glucose oxydase; le choix de l'enzyme est laissé à l'appréciation de l'utilisateur; les meilleurs résultats sont obtenus avec les complexes commercialisés par la firme VECTOR.
- Lavage dans PBS
- Révélation de l'activité enzymatique à l'aide des substrats spécifiques, obtenus auprès de la firme VECTOR
- Lavage à l'eau de ville courante
- Contre-coloration (en fonction des substrats utilisés) et montage des préparations.

Les principaux avantages de l'invention sont
1. la simplification extrême de la méthode de fixation et d'enrobage;
2. la préservation simultanée des structures morphologiques et moléculaires du tissu traité.

Des exemples comparatifs permettront d'illustrer les avantages du point 2.

Les procédés actuellement connus: congélation et fixation/enrobage sont dénaturants soit pour la morphologie des tissus (procédé à congélation) soit pour les structures moléculaires (procédé de fixation/enrobage), empêchant ainsi la reconnaissance des molécules par des anticorps spécifiques, bien que certains procédés de fixation/enrobage, utilisant notamment le formaldéhyde comme fixateur, permettent de reconnaître des protéines dénaturées à l'aide d'un nombre limité d'anticorps (anti-actine, anti-vimentine ...) capables de reconnaître des protéines dénaturées.

Les limitations inhérentes aux procédés de fixation/enrobage résultent, d'une part des dénaturations chimiques induites par les fixateurs eux-mêmes, par les agents déshydratants ainsi que par les solvants organiques miscibles à la paraffine; d'autre part des dénaturations thermiques survenant lors de l'inclusion dans la paraffine liquide à 60°C.

L'utilisation d'une résine à bas point de fusion (37°C) évite les problèmes de dénaturation thermique.

Une solution pour minimiser les dénaturations chimiques, consiste à restreindre au maximum le nombre de substances dénaturantes (alcools, solvants, ...), et donc à utiliser pour les étapes précédant l'enrobage, des composés entièrement miscibles à la résine d'enrobage.

Dans le tableau I qui suit, on compare les propriétés dénaturantes de procédés connus au procédé de l'invention.

**Tableau I:**

| Comparaison des propriétés dénaturantes de divers procédés | | |
|---|---|---|
| Procédé | Dénaturations morphologiques | Dénaturations chimiques |
| Congélation | fortes | faibles |
| Fixation/enrobage à la paraffine | négligeables | fortes |
| Acétone + résine | faibles à moyennes | faibles à moyennes |
| Procédé de l'invention | négligeables | négligeables |

### Exemples de dénaturations

Les figures annexées sont données pour illustrer la qualité des déterminations effectuées après traitement par le procédé de l'invention, par comparaison à d'autres techniques.

Les figures 1A à 1C sont des coupes, obtenues par congélation, dans un tissu de rate de souris, avec marquage immunohistochimique par un anticorps monoclonal anti-B7.2 (GL1) biotinylé, avec révélation à la phosphatase alcaline.

Les figures 2A et 2B sont des vues analogues, de la pulpe rouge de la rate, après fixation/déshydratation à l'acétone et enrobage à la résine de polyoxyéthylène bis(stéarate).

Les figures 3A à 3C sont des vues analogues, après traitement selon l'invention.

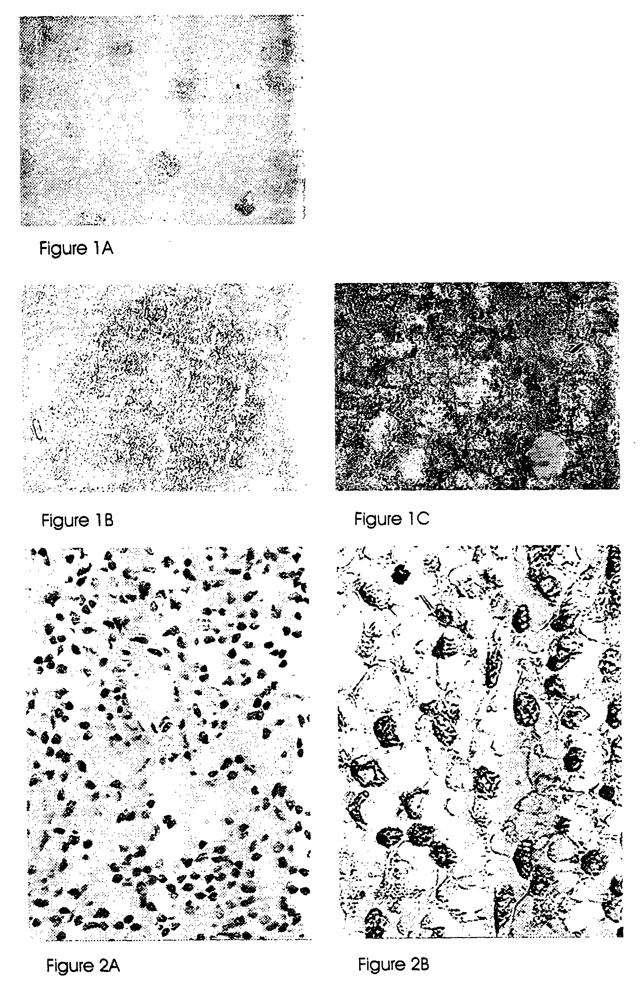

Les dénaturations induites par le procédé de coupes à congélation sont de nature mécanique: écrasement, élongation et déchirement du tissu (figure 1A et 1B). Elles se compliquent de la difficulté à réaliser des coupes suffisamment fines pour localiser avec précision les marquages obtenus par le traitement immunohistochimique (figure 1C).

En particulier:
La figure 1A est une vue à faible grossissement (4X), les cellules positives pour le marqueur B7.2 apparaissent plus sombres,
La figure 1B est une vue à grossissement moyen (25X) faisant apparaître des "trous" résultant d'un déchirement lors de la coupe,
La figure 1C est une vue à fort grossissement (100X) montrant qu'il n'est pas possible d'associer le marquage à une structure précise.

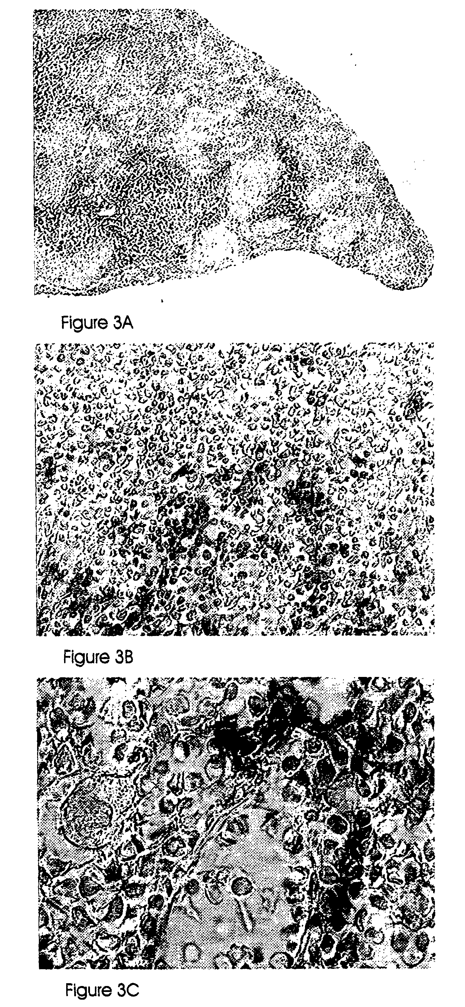

Comme on l'a mentionné plus haut, le procédé de fixation à l'acétone et enrobage par résine présente encore des inconvénients en ce qui concerne la préservation morphologique et chimique. Les figures 2 et 3 illustrent les perturbations morphologiques et les comparent avec les résultats obtenus par le procédé impliquant la fixation aux sels de zinc.

En particulier:
La figure 2A est une vue à grossissement moyen (40X); on note de grands espaces artéfactuels entre les cellules, résultant de la dilatation du tissu lors de la fixation,
La figure 2B est une vue à fort grossissement (100X) ; on observe en plus sombre les noyaux des cellules, mais on distingue à peine les globules rouges.

Les figures 3A et 3C illustrent parfaitement les possibilités de la technique de l'invention. Ces résultats ne pourraient être obtenus avec le procédé à congélation (figures 1), ni avec le procédé de fixation/déshydratation à l'acétone (figures 2).

En particulier:
La figure 3A est une vue à faible grossissement (4X) ; on observe (parties les plus sombres) le marquage spécifique des cellules dendritiques (marquage par un anticorps monoclonal N418, révélation à la phosphatase alcaline). Une contre-coloration au vert de méthyle permet de situer les structures morphologiques, les nodules de pulpe blanche apparaissant en plus clair, et la pulpe rouge en plus sombre,
La figure 3B est une vue à grossissement moyen (40X) des cellules dendritiques (les plus sombres) dans la pulpe blanche au contact des lymphocytes dont les noyaux apparaissent plus clairs. On note l'absence de déformation morphologique ainsi que la possibilité de visualiser chaque cellule,
La figure 3C est une vue à fort grossissement (100X) de la pulpe rouge. Outre les cellules dendritiques (halos plus sombres sur la figure), on distingue clairement: à gauche et à mi-hauteur une cellule géante de type mégacaryocyte; au centre, dans la partie inférieure, un sinus veineux dans lequel on aperçoit des globules rouges, et partout sur le cliché, les noyaux de toutes les cellules nucléées.

Outre l'avantage d'une parfaite préservation des structures morphologiques, le procédé de fixation/déshydratation aux sels de zinc/acétone, associé à l'enrobage à la température physiologique de ± 37°C, offre la possibilité de détecter un plus grand nombre de molécules sur coupes à l'aide d'anticorps monoclonaux. Le tableau II donne un aperçu de ces possibilités en les comparant aux autres procédés.

**Tableau II:**

| Comparaison des résultats immunohistochimiques obtenus avec les divers procédés | | | | | |
|---|---|---|---|---|---|
| Molécules reconnues (antigènes) | Anticorps | Procédé à congélation | Fixation/enrobage à la paraffine | Acétone + résine | Sels de zinc + acétone + résine |
| B220 | | +++ | - | +++ | +++ |
| MHC-C12 | 14.4.4 | +++ | - | +++ | +++ |
| CD11b | Mac-1 | +++ | - | +++ | +++ |
| CD11c | N418 | +++ | - | +++ | +++ |
| IgD | LOMD6 | +++ | - | +++ | +++ |
| NK | 5E6 | ++ | NT | NT | +++ |
| CD3 | 7D6 | ++ | - | - | +++ |
| CD4 | RM4-5 | +++ | - | - | +++ |
| CD8 | 53-6.7 | ++ | - | - | +++ |
| Vβ8 | F23.1 | ++ | NT | NT | +++ |
| Vβ6 | | +/- | NT | NT | +++ |
| B7.2 | GL-1 | + | - | +/- | +++ |
| DEC-205 | NLDC-145 | + | - | +/- | +++ |
| Il-2 | S4B6 | +/++ | NT | - | +++ |
| Il-4 | 11B11 | +/++ | NT | - | +++ |
| INFγ | DB1 | +/++ | NT | - | +++ |
| Galβ1-4Gal | PNA | ++ | +++ | +++ | +++ |
| Note: NT = non testé | | | | | |

Dans ce qui précède, on entend par résine de polyoxyéthylène bis(stéarate) une composition contenant ce composé, auquel on a éventuellement ajouté la quantité voulue (de 0 à 20% en poids en tout, sur base de 100% en poids de la composition) d'hexadécanol et/ou de diéthylène glycol distéarate, pour la rendre plus solide à température ambiante. Comme on l'a indiqué, le polyoxyéthylène bis(stéarate) seul est toutefois suffisamment solide à une température de 10-12°C, pour permettre les coupes fines souhaitées.

De même, bien que l'invention ait été décrite avec cette seule résine, il va de soi qu'elle peut être remplacée par toute résine présentant des propriétés analogues, à savoir une entière miscibilité à l'acétone, une température de fusion non supérieure à 37-40°C, et une solidité suffisante à température ordinaire, pour permettre d'obtenir de fines coupes de tissu dans les conditions du laboratoire.

L'invention concerne enfin une trousse de préparation de coupes histologiques permettant de réaliser ces dernières selon le procédé de l'invention.

## Revendications

1. Procédé de fixation et d'enrobage de tissus destinés à des préparations histologiques, dans lequel un tissu est fixé par un fixateur liquide, déshydraté par un agent déshydratant liquide, et infiltré/enrobé dans un composé à l'état fondu, dont la température de fusion est supérieure à la température ambiante, **caractérisé en ce qu'**il comprend essentiellement les étapes consistant à:
- fixer le tissu dans un fixateur liquide comprenant au moins un sel de zinc soluble, dans un tampon aqueux,
- déshydrater le tissu ainsi fixé dans un liquide constitué essentiellement d'acétone,
- enrober et infiltrer le tissu fixé et déshydraté par une résine soluble essentiellement en toute proportion dans l'acétone.

2. Procédé selon la revendication 1, **caractérisé en ce que** la résine fond à une température non supérieure à 37 - 40°C.

3. Procédé selon l'une quelconque des revendications 1 et 2, **caractérisé en ce que** la résine est constituée de polyoxyéthylène bis(stéarate).

4. Procédé selon la revendication 3, **caractérisé en ce que** la résine comprend, sur base de 100% en poids de la composition finale, de 0 à 20% en poids d'un composé solidifiant, comprenant de l'hexadécanol et/ou du diéthylène glycol distéarate, en vue de la rendre plus solide à température ambiante.

5. Trousse pour la préparation de coupes histologiques par application du procédé selon la revendication 1, **caractérisée en ce qu'**elle comprend essentiellement un flacon de solution aqueuse tamponnée d'un ou de plusieurs sels de zinc, un flacon d'acétone et une quantité de composition de résine de polyoxyéthylène bis(stéarate) additionnée d'hexadécanol et/ou de diéthylène glycol distéarate en fonction de la température voulue d'utilisation.

## Claims

1. Method for fixing and embedding tissues for histological preparations, in which a tissue is fixed by a liquid fixative, dehydrated by a liquid dehydrating agent, and infiltrated/embedded in a molten compound, the melting temperature of which is above the ambiant temperature, **characterized in that** it essentially comprises the steps comprising:
- fixing the tissue in a liquid fixative comprising at least one soluble zinc salt, in an aqueous buffer solution,
- dehydrating the fixed tissue in a liquid consisting essentially of acetone,
- embedding and infiltrating the fixed and dehydrated tissue with a molten resin which is soluble essentially in any proportion in acetone.

2. Method according to claim 1, **characterized in that** said resin melts at a temperature not greater than 37 - 40 °C.

3. Method according to anyone of claims 1 and 2, **characterized in that** said resin is composed of polyoxyethylene bis(stearate).

4. Method according to claim 3, **characterized in that** said resin is composed, based on 100% by weight of the final composition, of 0 to 20% by weight of a solidifying compound, comprising hexadecanol and/or diethylene glycol distearate, to make it more solid at the ambiant temperature

5. Kit for the preparation of histological sections by applying the method according to claim 1, **characterized in that** it substantially comprises a flask of an aqueous solution buffered with one or more zinc salts, a flask of acetone, and a quantity of a polyoxyethylene bis(stearate) resin composition mixed with hexadecanol and/or diethylene glycol distearate, depending on the intended temperature of use.

## Patentansprüche

1. Methode zum Fixieren und Einbetten von Geweben für histologische Präparate, bei dem ein Gewebe mittels eines flüssigen Fixiermittel fixiert, mittels eines flüssigen Entwässerungsmittels entwässert, und in eine Verbindung im geschmolzenen Zustand, deren Schmelztemperatur höher als die Raumtemperatur ist, infiltriert / eingebettet wird, **dadurch gekennzeichnet, dass** sie im wesentlichen Schritte umfaßt, die daraus bestehen:
- das Gewebe in einem flüssigen Fixiermittel zu fixieren, das mindestens ein lösliches Zinksalz, in einem wäßrigen Puffer enthält,
- das auf diese Weise fixierte Gewebe in einer im wesentlichen aus Aceton bestehenden Flüssigkeit zu entwässern,
- das fixierte und entwässerte Gewebe mit einem im wesentlichen in jedem Verhältnis in dem Aceton löslichen Harz einzubetten und zu infiltrieren.

2. Methode nach dem Anspruch 1, **dadurch gekennzeichnet, dass** das Harz bei einer Temperatur schmilzt, die nicht höher als 37 - 40° C liegt.

3. Methode nach einem der Ansprüche 1 und 2, **dadurch gekennzeichnet, dass** das Harz aus Polyoxyethylen bis (Stearat) besteht.

4. Methode nach dem Anspruch 3, **dadurch gekennzeichnet, dass** das Harz, auf der Grundlage von 100 % in Gewicht der Endzusammensetzung, 0 bis 20 % in Gewicht einer festigenden Verbindung enthält, die Hexadekanol und / oder Diethylenglykoldistearat enthält, um es bei Raumtemperatur fester zu machen.

5. Kit zum Präparieren von histologischen Schnitten bei Anwendung des Verfahrens nach dem Anspruch 1, **dadurch gekennzeichnet, dass** es im wesentlichen ein Fläschchen wäßriger Lösung, die mit einem oder mehreren Zinksalzen gepuffert ist, ein Fläschchen Aceton und eine gewisse Menge von Harzzusammensetzungen aus Polyoxyethylen bis (Stearat) mit Zusätzen von Hexadekanol und / oder Diethylenglykoldistearat entsprechend der gewünschten Einsatztemperatur, umfaßt.
